# EUROPEAN PATENT SPECIFICATION

(11) **EP 3 351 502 B1**
(45) Date of publication and mention of the grant of the patent: **10.03.2021**
(21) Application number: 18020025.5
(22) Date of filing: 16.01.2018
(51) Int. Cl.: A01K 1/00, B66F 9/12

(54) **WORK PIECE AND USE OF THIS WORK PIECE IN A METHOD FOR CLEANING A CAGE**
WERKSTÜCK UND VERWENDUNG DIESES WERKSTÜCKS IN EINEM VERFAHREN ZUM REINIGEN EINES KÄFIGS
PIÈCE ET UTILISATION DE CETTE PIÈCE DANS UN PROCÉDÉ DE NETTOYAGE D'UNE CAGE

(30) Priority: 21.01.2017 BE 170007
(43) Date of publication of application: 25.07.2018
(73) Proprietor: AB Loonconstruct BVBA, 2990 Wuustwezel (BE)
(72) Inventor: Aernouts, Jan, 2990 Wuustwezel (BE)
(74) Representative: Theunis, Patrick

(56) References cited:
- EP-A1- 0 298 712
- SU-A1- 1 550 826
- US-A- 4 838 752
- US-A1- 2006 243 465
- US-A1- 2010 111 655

## Description

### Field of the invention

The present invention relates to a work piece as well as to the use of this work piece in a method for cleaning a cage
Document US4838752 discloses a work piece attachment adapted for lifting, carrying and dumping individual containers. The apparatus includes a base frame, a carriage mounted on the base frame for receiving the container, retaining arms for securing the container on the upper surface of the carriage and a safety mechanism for preventing the tilting of the carriage when the container is positioned over the retaining arms. The carriage has a fix longitudinal structure, therefore containers with certain longitudinal lengths may be handled.

More in particular the invention relates to a work piece, the use thereof and a method for cleaning a cage for animals, in particular calf's.

When used, the dung in the case should not be cleared out manually any more.

This in particular is applicable in case of individual housing of calf's, as well as for other animals.

### Background of the invention

It is known for quite some time in the veterinary science that the individual housing of calf's for longer periods of time yields multiple benefits in terms of health, such as diarrhea, pulmonary diseases, mycoplasma and a number of other health problems that are related to the immune system.

By housing the animals individually, the contamination risk substantially decreases and the need for medication (e.g. antibiotics) will likewise be reduced.

Individual housing already is available for quite some time, but in practice it is not often used given its labor-intensive character. One of the drawbacks relating to the individual housing of animals in cages is the need to manually clear out the dung of each individual cage. This is not a pretty task to perform.

If a method or mode of operation would be available that would render the clearing out of the dung of a cage quicker and/or more convenient or at least more efficient, more calf's (or other animals) would be housed individually, resulting in more healthy calf's (or other animals) and less use of medication (antibiotics). A more pleasant way of working for the cattle-breeder and/or his employees also implies a faster way of working.

Breeding of calf's has taken place for centuries. The last 50 years breeding enterprises grow bigger and more intensive all over the world, and this is also a requirement to provide cheap nutrition for the growing world population. However such intensification and growth of the breeding enterprises the risk of contamination and diseases with cattle and calf's increases likewise. Individual breeding of calf's up to 8 - 10 weeks result clearly in more healthy calf's and later on also more healthy cows. In turn, this results in reduced use of medication (e.g. antibiotics).

Individual breeding of calf's however is much more labor intensive compared to housing of calf's in group. With respect to the feeding of the animals, a number of suitable means to simplify same are available on the market. If likewise a method would be available to also render the cleaning of the cages more efficient and pleasant to the cattle-breeder, for sure more calf's would be individually housed, this in turn would benefit the health of the breeded calf's. In the end also the human health would benefit from such method.

In view of the above, there remains a need for a method and a means to clean the cages for individual housing of animals, calf's in particular, in a quick and user-friendly manner.

### Summary of the invention

The present Applicant has devised and embodied this invention to overcome these shortcomings and to obtain further advantages.
An object of the present invention is to provide a work piece as well as the use of such work piece, as well as a method for the use of such work piece for the automated and efficient cleaning of a cage, in particular a cage for the individual housing of animals such as calf's.

To this end the invention relates to a work piece suitable when installed on a lifting gear to lift and tilt forwardly a cage assembled on a rectangular mounting frame (7) to lift en tilt forwardly, characterized in that:
- the work piece comprises a rectangular bar-frame (1) and two telescopic bar combinations (2), one end (3) whereof is mounted on one of the sides (4) of the rectangular bar-frame (1);
- the other end (5) of each telescopic bar combination is provided with a hook (6) for attachment of the front side (12) of the mounting frame (7) of the cage, and
- the erecting bars (8) of the rectangular bar-frame (1) are provided with a projecting part (9) positioned above the mounting point of the telescopic bar combinations (2) such that the backside (13) of the mounting frame (7) of the cage fits into the opening formed by the lower part of the projecting part (9), the upper part of the telescopic bar combinations (2), the erecting bars (8) of the rectangular bar-frame (1).
More in particular, the invention comprises the work piece as set forth above, the use thereof and the method as described in the claims set forth hereinafter.

The invention is defined and characterized in the main claim, while the dependent claims describe other characteristics and specific features for preferred embodiments of the invention.
The objects and advantages set forth above are given only by way of illustrative example, and such objects may be exemplary of one or more embodiments of the invention. Other desirable objectives and advantages inherently achieved by the disclosed invention may occur or become apparent to those skilled in the art.
Further aspects and advantages of the embodiments described will appear from the following description taken together with the accompanying drawings.

### Brief description of the drawings

The foregoing and other objects, features, and advantages of the invention will be apparent from the following description of a preferential form of the embodiments of the invention, as illustrated in the accompanying drawings, given as a non-restrictive example.
It will be appreciated that for simplicity and clarity of illustration, elements shown in the drawings have not necessarily been drawn to scale, nor are these elements necessarily to scale relative to each other. For example, the dimensions of some of the elements may be exaggerated relative to other elements for clarity. Further, where considered appropriate, reference numerals may be repeated among the figures to indicate corresponding or analogous elements. So, in the drawings, the same reference numerals may identify the same elements of structure in each of the several figures where appropriate.
In the figures, the thickness of certain lines, layers, components, elements or features may be exaggerated for clarity. Broken lines illustrate optional features or operations unless specified otherwise.

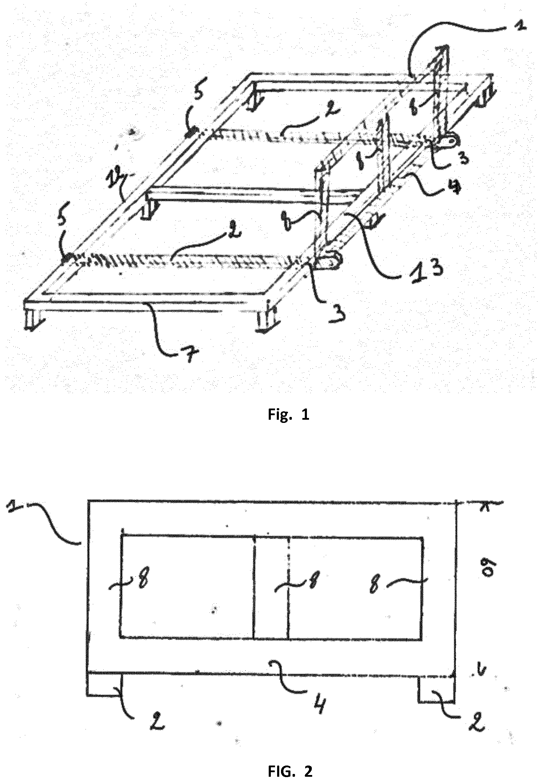

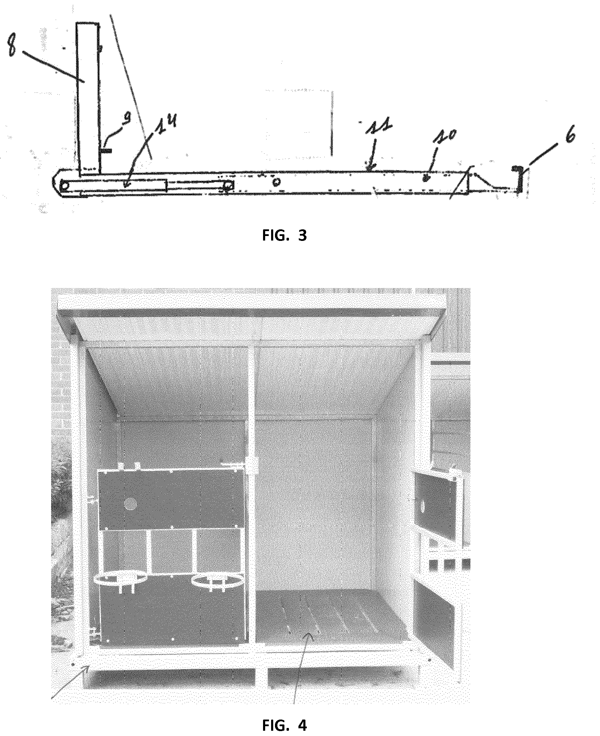

In these figures the following views of the work piece according to the invention are set forth:
✔ Fig. 1 shows a schematic illustration in perspective of the work piece according to the invention, mounted on a mounting frame of a cage for an animal.
✔ Fig. 2 shows a front view (taken from the point of view of the lifting gear) of the work piece according to the invention;
✔ Fig. 3 shows a side view (taken from the point of view of the lifting gear) of the work piece according to the invention.

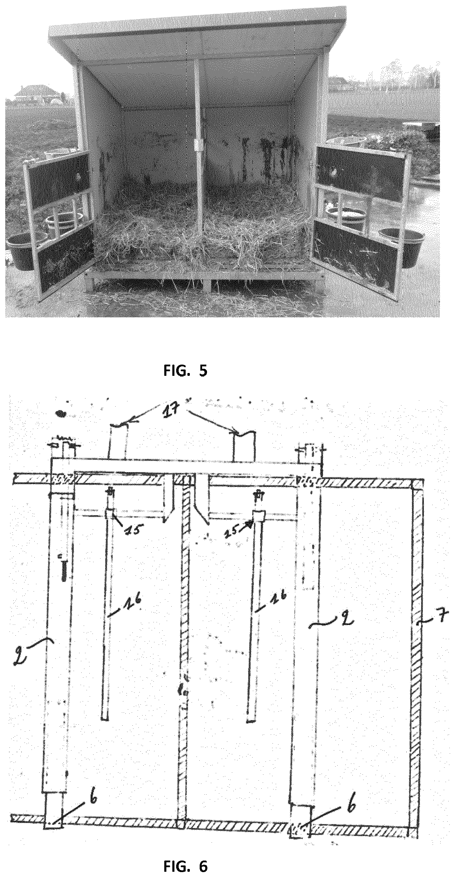

So as to illustrate the use of the work piece and the method according to the invention, some figures are set forth showing a cage before and after cleaning.
✔ Fig. 4 shows a cage for individual housing of a calf after cleaning.
✔ Fig. 5 shows the same cage before cleaning.
✔ Fig. 6 shows a lever construction as optional element for tilting and lifting-off of the bottom placed on the mounting frame.
The figures comprise a number of reference signs.
Throughout the various figures the reference signs relate to the same elements or parts of the work piece according to the invention.
All in total 17 reference signs are used; these refer to the elements of the work piece according to the invention set forth hereinafter:
(1) the rectangular bar-frame;
(2) the telescopic bar combinations;
(3) one end of each telescopic bar combination;
(4) one side of the rectangular bar-frame;
(5) the other end of each telescopic bar combination;
(6) hook, mounted on the end of the inner bar of each telescopic bar combination;
(7) mounting frame for the cage;
(8) erecting bars of the rectangular bar combination;
(9) projecting part positioned above the mounting point of the telescopic bar combination (2);
(10) inner-bar;
(11) outer-bar;
(12) front side of the mounting frame;
(13) backside of the mounting frame;
(14) hydraulic cylinder;
(15) pivoting point;
(16) lever bar;
(17) connection to the lifting gear.

### Detailed description of embodiments of the invention

The following is a detailed description of the preferred embodiments of the invention, reference being made to the drawings.

It will be appreciated that for simplicity and clarity of illustration, where considered appropriate, numerous specific details are set forth in order to provide a thorough understanding of the exemplary embodiments described herein. The present invention now is described more fully hereinafter with reference to the accompanying drawings, in which embodiments of the invention are shown. However, it will be understood by those of ordinary skill in the art that the embodiments described herein may be practiced without these specific details. Indeed, this invention may be embodied in many different forms and should not be construed as limited to the embodiments set forth herein; rather, these embodiments are provided so that this disclosure will be thorough and complete, and will fully convey the scope of the invention to those skilled in the art.

In other instances, well-known methods, procedures and components have not been described in detail so as not to obscure the embodiments described herein.

In the claims as set forth hereinafter, the word "comprising" does not exclude other elements or steps, and the indefinite article "a" or "an" does not exclude a plurality. The mere fact that certain measures are recited in mutually different dependent claims does not indicate that a combination of these measures can not be used to advantage.

In the claims, the claimed methods are not limited to the order of any steps recited unless so stated thereat.

The invention relates to a work piece that when mounted on a lifting gear, is able to lift, optionally move, and tilt a cage for individual housing of animals in particular, without any requirement for further manual intervention or handling.
When using the method according to the invention, the cage is tilted forwardly, this in turn causing the doors at the front side of the cage to open automatically (under gravity force).
When tilted further, the combination of straw and dung on the bottom of the cage, will drop out of the cage.
Thereafter, the cage can be repositioned in its usual or normal position.
The bottom of the cage is then put again in its usual or normal position in the cage.

Thereupon the cage is again ready for use.
The figures 4 & 5 show in front view a cage that can be cleaned according to the method of the invention.
Figure 5 shows the cage before cleaning, figure 4 shows the cage after cleaning.
In these figures a cage is shown for housing two calf's, one in the left compartment, the other in the compartment shown right.
The term 'individual housing' as used in the present specification, should be understood as housing for a limited number of animals in individual cages, this contrary to the housing of a few tens or hundreds of animals in one big stable. Such individual cages then provide housing for either one animal per cage, two animals per cage (as shown in the cage of figures 4 & 5), or anyhow less than five animals per cage.

The front side of the cage comprises doors that may carry for instance one or more buckets.
One bucket may hold the feed, another bucket may contain drinking water.
By turning the doors, the animal, e.g. the calf, can move in or out of the cage.
The cage may be mounted on a mounting frame, the latter having usually a rectangular shape.
This mounting frame usually is placed on legs or supports such that the frame and the bottom positioned on such frame are not directly in contact with the ground. In such a case a clearance between the ground and the lower side of the bottom, resp. the mounting frame is available.

The term 'front side of the cage' should be understood as that side of the cage comprising the doors.
The other sides of the cage, namely the side edges, the back side as well as the roof of the cage are made windproof by use of for example corrugated plates as shown on the figures 4 & 5. In most cases these sides are fixedly mounted on the mounting frame and only the doors at the front side of the cage can be opened.

The animals, for example the calf's, can then enter or leave the cage through the opened doors.

The method according to the invention for the cleaning of a cage the comprises the following steps:
- positioning of the work piece as set forth above and as described hereinafter in greater detail by reference to a lifting gear;
- positioning of the telescopic bar combinations (2) underneath the mounting frame (7) of the cage;
- drawing out of the telescopic inner bars (10) beyond the front side (12) of the mounting frame (7), followed by partly pushing in until the front side (12) of the mounting frame (7) is stuck in the hooks (6) of the inner bars (10);
- fastening of the backside (13) of the mounting frame (7) in the opening formed by the lower part of the projecting part (9), the upper part of the telescopic bar combinations (2), and the erecting bars (8) of the rectangular bar-frame (1);
- unlocking of the doors of the cage;
- lifting and tilting forwardly of the cage until a bottom placed upon the mounting frame (7) along with the dirt and dung residing on it, falls out of the cage.

Once the method according to the invention has been applied, the cage is cleaned. It is then sufficient to reposition the bottom on the mounting frame of the cage and the cage is again ready for use.

According to a preferred mode of operation of the invention, after lifting of the cage, the cage is moved to a central cleaning location. On this central cleaning location the method of the invention can then be applied to the cage to be cleaned.
The advantage of the latter operation mode is that all dirt from the cleaned cages such as straw and dung is centrally collected for further disposal.
Evidently the animals housed in the cages such as the calf's, should be removed from the cage before lifting the cage, or at the very latest, before tilting forwardly of the cage.
According to a further preferred mode of operation of the invention, the bottom positioned on the mounting frame (7) is freed from the mounting frame (7) by means of a lever.
Such bottom positioned on the mounting frame (7) preferably comprises (wooden) boards or planks positioned near to each other, whereby between the individual boards openings are provided that allow the disposal of liquid dirt such as urine of the animals housed in the cage.
This bottom is place loosely on the mounting frame such that when the cage is tilted, this bottom through the opened doors at the front side of the cage falls on the ground under the force of gravity.
It suffices then the take the bottom from the ground, to clean same and to reposition it in the cleaned cage.
According to a further preferred mode of operation of the method of the invention, this cleaning step may comprise a cleaning by water (e.g. hydraulic descaling) of the cage by means of a high pressure cleaner.
If need be, the bottom, as the case may be together with the cage, may be disinfected before re-use.

According to a further preferred mode of operation of the invention, the bottom is repositioned in the cage after pivoting the case to its normal position, this means once the cage is tilted backwardly again in its usual horizontal position, out of the (nearly-) vertical cleaning position.

According to a further preferred mode of operation of the invention, the work piece comprises an optional element that facilitates the release of the bottom of the mounting frame. An example of such optional element is a lever construction as shown in figure 6. By such means the bottom is forced to tilt forwardly either by ma motor, hydraulically or by means of a lever pivoting point.
Figure 6 shows such a lever with pivoting point (15); the cane of the lever comprises a short and long (16) end around a pivoting point (15) to enable the leverage function. By such means the bottom can without the use of strong human interaction be tilted and released from the mounting frame.

The work piece according to the invention is suitable when installed on a lifting gear or apparatus, to lift a cage mounted on a rectangular mounting frame (7) and to tilt same forwardly.

To this end, the work piece according to the invention is characterized as follows:
- the work piece comprises a rectangular bar-frame (1) and two telescopic bar combinations (2), one end (3) whereof is mounted on one of the sides (4) of the rectangular bar-frame (1);
- the other end (5) of each telescopic bar combination is provided with a hook (6) for attachment of the front side (12) of the mounting frame (7) of the cage, and
- the erecting bars (8) of the rectangular bar-frame (1) are provided with a projecting part (9) positioned above the mounting point of the telescopic bar combinations (2) such that the backside (13) of the mounting frame (1) of the cage fits into the opening formed by the lower part of the projecting part (9), the upper part of the telescopic bar combinations (2), the erecting bars (8) of the rectangular bar-frame (1).

As lifting gear suitable for use in the method of the present invention, a tractor can be used comprising a front-loader, a fork-lift, a fork truck or any other vehicle comprising the necessary leverage points so as to lift or take up the rectangular bar frame (1) and to manipulate, control or handle same from the cabin of the vehicle.
The interaction between the lifting gear and the work piece according to the invention preferably takes place by means of fast-fixing systems. Such systems are known to the person skilled in the art, hence these are not shown on the figures of the present specification. Such system in most cases comprise a female and male connecting element that fit into each other. By means of e.g. hydraulic connections the various elements of the work piece can then be steered or operated from the cabin of the lifting gear.
Such fast connection systems differ for each brand of lifting gear.
Hooks corresponding and matching to the type of connection system of the tilting gear are provided on the work piece according to the invention. In a corresponding manner the nipples for connection to the conduits of the hydraulic cylinder are provided on the work piece.

The telescopic bar combinations (2) comprise a inner bar (10) that is mounted in a sliding manner in an outer bar (11). In this way the inner bar can move in and out of the outer bar. This movement can be occasioned for example by using a double working hydraulic cylinder (14), that performs as well the sliding-in as the sliding-out function under pressure.
Use can also be made of a single working hydraulic cylinder that performs for example only the sliding-in. The sliding-out is then performed manually or under the force of gravity.

In order for the bottom of the mounting frame to fall down when the cage is being tilted, this tilting should take place in a forward direction.
By forward tilting in the context of the present invention is meant that the front side of the cage, this is the side comprising the doors of the cage, should turn downwardly, whereas the backside of the cage should turn upwardly.
In this way, under the force of gravity, the bottom will be released from the mounting frame and fall out of the cage, along with the dirt positioned on its surface.
According to a preferred mode of operation of the invention, the cage is lifted at its backside by the lifting gear.
As an alternative mode of operation of the present invention, such lifting can also take place at one of the sides of the cage, either left or right.
What is essential for the present mode of operation of the invention, is that the tilting of the cage should take place forwardly.

One of the advantages of the method of the present invention is that the cleaning of the cage can be performed automatically and in a much more convenient and efficient way. In particular, no or a minimal manual intervention is required for performing this method. As a result the cleaning of the cages can be performed by any of the employees working in the breeding farm. This in turn allows the animals, the calf's in particular, to be individually housed, which in turns results In healthier calf's, and finally in healthy for for mankind.

## Claims

1. Work piece suitable, upon installation on a lifting gear, for lifting and tilting forwardly a cage assembled on a rectangular mounting frame (7),
- the work piece comprises a rectangular bar-frame (1) and two telescopic bar combinations (2), one end (3) thereof is mounted on one of the sides (4) of the rectangular bar-frame (1);
- the other end (5) of each telescopic bar combination is provided with a hook (6) for attachment of the front side (12) of the mounting frame (7) of the cage, and
- the erecting bars (8) of the rectangular bar-frame (1) are provided with a projecting part (9) positioned above the mounting point of the telescopic bar combination (2) such that the backside (13) of the mounting frame (7) of the cage fits into the opening formed by the lower part of the projecting part (9), the upper part of the telescopic bar combinations (2), and the erecting bars (8) of the rectangular bar-frame (1).

2. Work piece according to claim 1, **characterized in that** the telescopic bar combination (2) comprises a inner bar (10) slidably mounted in an outer bar (11) and that the hook (6) is mounted on the end (5) of the inner bar (10) protruding out of the outer bar (11).

3. Work piece according to claim 2, **characterized in that** the work piece comprises a hydraulic cylinder (14) and **in that** the front side (12) of the mounting frame (7) of the cage is suitable for being affixed into the hook (6) of the slidable bar combination (2), by the hydraulic cylinder (14) pulling the inner bar with respect to the outer bar (11).

4. Work piece according to anyone of the preceding claims, **characterized in that** the telescopic bar combinations (2) are mounted on or below the lower corner points of the rectangular bar frame (1).

5. Use of the work piece according to anyone of the preceding claims for the cleaning of a cage.

6. Use of the work piece according to claim 5, **characterized in that** the lifting gear is a forklift.

7. Use of the work piece according to claim 5 or 6, **characterized in that** the cage is a cage for housing (an) animal(s), more in particular (a) calf(s).

8. Method for the cleaning of a cage comprising the following steps:
- positioning of the work piece according to any of the claims 1 through 4 on a lifting gear;
- positioning of the telescopic bar combinations (2) underneath the mounting frame (7) of the cage;
- drawing out of the telescopic inner bars (10) beyond the front side (12) of the mounting frame (7), followed by partly pushing-in until the front side (12) of the mounting frame (7) is stuck in the hooks (6) of the inner bars (10);
- fastening of the backside (13) of the mounting frame (7) in the opening formed by the lower part of the projecting part (9), the upper part of the telescopic bar combination (2), and the erecting bars (8) of the rectangular bar-frame (1);
- unlocking of the doors of the cage;
- lifting and tilting forwardly the cage until a bottom placed upon the mounting frame (7) along with the dirt residing on it, falls out of the cage.

9. Method according to claim 8, whereby prior to the forward tilting of the cage, the cage is moved to a central cleaning location.

10. Method according to any one of claims 8 or 9, whereby the bottom positioned on the mounting frame (7) is released from the mounting frame (7) by means of a lever.

## Patentansprüche

1. Werkstück, das bei Montage auf einem Hebezeug geeignet ist, einen auf einem rechteckigen Montagerahmen (7) montierten Käfig zu heben und nach vorne zu kippen,
- das Werkstück weist einen rechteckigen Stangenrahmen (1) und zwei Teleskopstangenkombinationen (2) auf, wovon ein Ende (3) an einer der Seiten (4) des rechteckigen Stangenrahmens (1) montiert ist;
- das andere Ende (5) jeder Teleskopstangenkombination ist mit einem Haken (6) zur Befestigung der Vorderseite (12) des Montagerahmens (7) des Käfigs versehen, und
- die Aufrichtestangen (8) des rechteckigen Stangenrahmens (1) mit einem vorstehenden Teil (9) versehen sind, der über dem Montagepunkt der Teleskopstangenkombination (2) so positioniert ist, dass die Rückseite (13) des Montagerahmens (7) des Käfigs in die Öffnung passt, die durch den unteren Teil des vorstehenden Teils (9), den oberen Teil der Teleskopstangenkombinationen (2) und die Aufrichtestangen (8) des rechteckigen Stangenrahmens (1) gebildet wird.

2. Werkstück nach Anspruch 1, **dadurch gekennzeichnet, dass** die Teleskopstangenkombination (2) eine innere Stange (10) aufweist, die verschiebbar in einer äußeren Stange (11) montiert ist, und dass der Haken (6) an dem aus der äußeren Stange (11) herausragenden Ende (5) der inneren Stange (10) montiert ist.

3. Werkstück nach Anspruch 2, **dadurch gekennzeichnet, dass** das Werkstück einen Hydraulikzylinder (14) aufweist und dass die Vorderseite (12) des Montagerahmens (7) des Käfigs geeignet ist, in den Haken (6) der verschiebbaren Stangenkombination (2) eingehängt zu werden, indem der Hydraulikzylinder (14) den inneren Stab in Bezug auf den äußeren Stab (11) zieht.

4. Werkstück nach einem der vorstehenden Ansprüche, **dadurch gekennzeichnet, dass** die Teleskopstabkombinationen (2) auf oder unter den unteren Eckpunkten des rechteckigen Stabrahmens (1) montiert sind.

5. Verwendung des Werkstücks nach einem der vorstehenden Ansprüche für die Reinigung eines Käfigs.

6. Verwendung des Werkstücks nach Anspruch 5, **dadurch gekennzeichnet, dass** das Hebezeug ein Gabelstapler ist.

7. Verwendung des Werkstücks nach Anspruch 5 oder 6, **dadurch gekennzeichnet, dass** der Käfig ein Käfig zur Unterbringung von (einem) Tier(en), insbesondere eines Kalbs bzw. von Kälbern, ist.

8. Verfahren zur Reinigung eines Käfigs, aufweisend die folgenden Schritte:
- Positionieren des Werkstücks nach einem der Ansprüche 1 bis 4 auf einem Hebezeug;
- Positionieren der Teleskopstangenkombinationen (2) unter dem Montagerahmen (7) des Käfigs;
- Herausziehen der teleskopischen Innenstäbe (10) über die Vorderseite (12) des Montagerahmens (7) hinaus, gefolgt von einem teilweisen Einschieben, bis die Vorderseite (12) des Montagerahmens (7) in den Haken (6) der Innenstäbe (10) sitzt;
- Befestigen der Rückseite (13) des Montagerahmens (7) in der Öffnung, die durch den unteren Teil des vorstehenden Teils (9), den oberen Teil der Teleskopstabkombination (2) und die Aufrichtstäbe (8) des rechteckigen Stabrahmens (1) gebildet wird;
- Entriegeln der Türen des Käfigs;
- Anheben und Vorwärtskippen des Käfigs, bis ein auf den Montagerahmen (7) aufgesetzter Boden zusammen mit dem darauf befindlichen Schmutz aus dem Käfig herausfällt.

9. Verfahren nach Anspruch 8, wobei vor dem Vorwärtskippen des Käfigs der Käfig an eine zentrale Reinigungsstelle bewegt wird.

10. Verfahren nach einem der Ansprüche 8 oder 9, wobei der auf dem Montagerahmen (7) positionierte Boden mittels eines Hebels vom Montagerahmen (7) gelöst wird.

## Revendications

1. Une pièce de travail, lors d'une installation sur un engins de levage, apte à lever et basculer en avant une cage assemblée sur un cadre de montage rectangulaire (7)
- La pièce de travail comprend un cadre rectangulaire de barres (1) et deux combinaisons de barres extensibles(2), dont un bout (3) est monté sur un des côtés (4) du cadre rectangulaire de barres (1)
- L'autre bout (5) de chaque combinaison de barres extensibles est pourvu d'un crochet (6) comme fixation au côté avant (12) du cadre de montage (7) de la cage, et
- Les barres ascendantes (8) du cadre rectangulaire de barres sont pourvues d'un élément protubérant (9) positionné au-dessus du point de montage de la combinaison des barres extensibles (2), de sorte que l'arrière (13) du cadre de montage (7) de la cage s'emboîte dans l'ouverture formée par le dessous de l'élément protubérant (9), le dessus des combinaisons de barres extensibles (2) et les barres ascendantes (8) du cadre rectangulaire de barres (1).

2. Une pièce de travail selon la revendication 1, **caractérisée en ce que** la combinaison des barres extensibles (2) comprend une barre interne (10) coulissant dans une barre externe (11) et que le crochet (6) est monté sur le bout (5) de la barre interne (10) qui sort de la barre externe (11).

3. Une pièce de travail selon la revendication 2, **caractérisée en ce que** la pièce de travail comprend un cylindre hydraulique et **en ce que** l'avant (12) du cadre de montage (7) de la cage soit adaptée à être fixée dans le crochet (6) de la combinaison de barres extensibles, de sorte que la barre interne (10) soit tirée au moyen d'un cylindre hydraulique (14) par rapport à la barre externe (11).

4. Une pièce de travail selon l'une quelconque des revendications précédentes, selon laquelle les combinaisons de barres extensibles (2) sont montées au-dessus ou en-dessous des coins du cadre rectangulaire de barres (1).

5. Utilisation de la pièce de travail selon l'une quelconque des revendications précédentes pour le nettoyage d'une cage.

6. Utilisation de la pièce de travail selon la revendication 5, **caractérisé en ce que** l'engins de levage est un chariot élévateur.

7. Utilisation de la pièce de travail selon la revendication 5 ou 6, **caractérisé en ce que** la cage est une cage pour loger un (des) animal (aux), plus particulièrement pour (un) veau(x).

8. Méthode pour le nettoyage d'une cage, comprenant les étapes suivantes :
- positionnement de la pièce de travail selon une quelconque des revendications 1 à 4 sur un engin de levage ;
- positionnement des combinaisons de barres extensibles (2) en dessous du cadre de montage (7) de la cage ;
- extension des barres internes extensibles (10) au-delà du côté avant (12) du cadre de montage (7) suivi par l'insertion partiel jusqu'à ce que le côté avant (12) du cadre de montage (7) est fixé dans les crochets (6) des barres internes (10) ;
- fixation du côté arrière (13) du cadre de montage (7) dans l'ouverture formée par le côté en dessous de l'élément protubérant (9), le côté supérieur de la combinaison des barres extensibles (2) et les barres ascendantes (8) du cadre rectangulaire de barres (1) ;
- déverrouillage des portes de la cage ;
- élévation et basculement en avant de la cage jusqu'à ce que un sol placé sur le cadre de montage (7), ainsi que les saletés du sol, tombent de la cage.

9. Méthode selon la revendication 8, selon laquelle avant de lever et basculer la cage, la cage est déplacée vers un lieu central de nettoyage

10. Méthode selon une quelconque des revendications 8 ou 9, selon laquelle le sol placé sur le cadre de montage (7) est libéré du cadre de montage (7) par un levier.
